# EUROPEAN PATENT APPLICATION

(11) **EP 4 703 442 A1**
(43) Date of publication of application: **04.03.2026**
(21) Application number: 25197398.8
(22) Date of filing: 21.08.2025
(51) Int. Cl.: C09D 11/322, C09D 11/38

(54) **INK**

(30) Priority: 26.08.2024 JP 2024144025
(71) Applicant: KYOCERA Document Solutions Inc., Osaka-shi, Osaka 540-8585 (JP)
(72) Inventor: ISHIDA, Azumi, Osaka-shi, Osaka, 540-8585 (JP)
(74) Representative: Viering, Jentschura & Partner mbB Patent- und Rechtsanwälte

(57) **Abstract**

An ink includes: a surfactant represented by the following general formula (1); a water-soluble solvent having a log Kow of -1.0 or more and 0.85 or less; a pigment; and a water. A content of the water-soluble solvent is 20 mass% or more and 50 mass% or less. 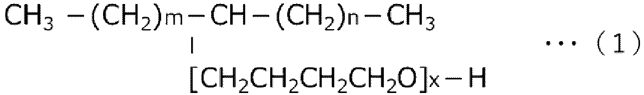 (In the general formula (1), m and n each represent an integer satisfying a relationship of 12 ≤ m + n ≤ 14, and x represent an integer of 1 or more and 10 or less.)

## Description

### Field

The present disclosure relates to an ink for recording an image on a recording medium.

### Background

An inkjet recording apparatus records images on a recording medium such as paper by repeatedly ejecting small droplets of ink onto the recording medium from a nozzle. In the inkjet recording apparatus, the ink wets and spreads to a certain extent on the recording medium, enabling the formation of high-quality images without unevenness. Japanese Patent No. 4815818 discloses a technology for improving the wet-spreading property of the ink on the recording medium by using a surfactant having a specific structure.

### Summary

According to an embodiment of the present disclosure, there is provided an ink, including: a surfactant represented by the following general formula (1); a water-soluble solvent having a log Kow of -1.0 or more and 0.85 or less; a pigment; and water.

A content of the water-soluble solvent is 20 mass% or more and 50 mass% or less. 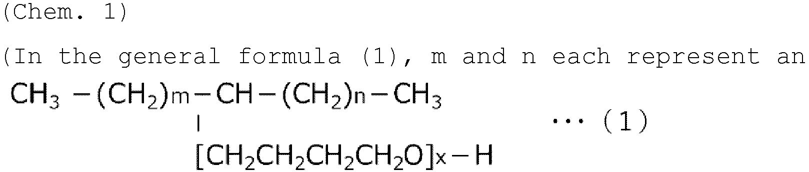 integer satisfying a relationship of 12 ≤ m + n ≤ 14, and x represent an integer of 1 or more and 10 or less.)

### Detailed Description

In recording media including fibers such as cellulose fibers, when images are recorded using ink with a high wet-spreading property, a phenomenon called "curling", in which the recording media are caused to have a curved shape due to partial expansion and contraction of the fibers, tends to occur. For this reason, in technologies for improving the wet-spreading property of the ink using a surfactant as in the technology described in Japanese Patent No. 4815818, it is generally conceivable that curling is likely to occur in the recording medium on which the image is recorded by the ink.

In view of the circumstances as described above, it is desired to provide an ink that suppresses the occurrence of curling in a recording medium while achieving the wet-spreading property on the recording medium.

An embodiment of the present disclosure will be described.

### [Configuration of ink]

### (Schematic configuration)

An ink according to an embodiment of the present disclosure includes a surfactant a, a water-soluble solvent b, a pigment c, and water. The ink according to this embodiment is typically a water-based ink that is ejected onto a recording medium from a recording head of an inkjet recording apparatus to record an image on the recording medium. The recording medium on which an image is to be recorded by the ink according to this embodiment includes a fiber such as a cellulose fiber. Examples of such a recording medium include plain paper, copy paper, recycled paper, thin paper, and thick paper.

In the ink according to this embodiment, it is possible to achieve the wet-spreading property on the recording medium by using the surfactant a having a specific configuration and suppress the occurrence of curling in the recording medium by using the water-soluble solvent b having a specific configuration. That is, in the ink according to this embodiment, it is possible to suppress the occurrence of curling in the recording medium while achieving the wet-spreading property on the recording medium by the effects of the surfactant a and the water-soluble solvent b. Details of each component of the ink according to this embodiment will be described below.

### (Water-soluble solvent b)

In the ink according to this embodiment, the use of the water-soluble solvent b having relatively high hydrophobicity suppresses the penetration into the recording medium. As a result, in the ink according to this embodiment, it is possible to suppress the occurrence of curling due to partial expansion and contraction in the recording medium. The water-soluble solvent b has a log Kow of -1.0 or more, favorably 0.4 or more, from the viewpoint of effectively suppressing the occurrence of curling in the recording medium. Further, the water-soluble solvent b has a log Kow of 0.85 or less from the viewpoint of achieving the solubility in water.

In the ink according to this embodiment, the content of the water-soluble solvent b is 20 mass% or more in order to sufficiently achieve the above effect of the water-soluble solvent b. Further, in the ink according to this embodiment, the content of the water-soluble solvent b is 50 mass% or less from the viewpoints of achieving the ejection stability and suppressing a decrease in ejection stability due to agglomeration of the pigment.

### (Surfactant a)

In the ink according to this embodiment, the surfactant a represented by the following general formula (1) is used. The surfactant a has an alkyl chain and a butylene oxide chain. The surfactant a has an alkyl chain and a butylene oxide chain in a balanced ratio such that the entire hydrophobicity is relatively low. As a result, the surfactant a allows the dynamic surface tension of the ink to be reduced without impairing the effect of suppressing the occurrence of curling by the relatively high hydrophobicity of the water-soluble solvent b. Specifically, the dynamic surface tension of the ink at the surface age of 10 msec is favorably 30 mN/m or more and 40 mN/m or less. 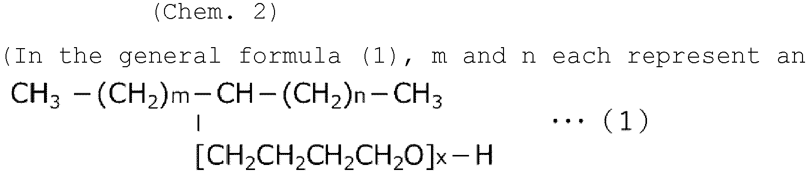 integer satisfying a relationship of 12 ≤ m + n ≤ 14, and x represent an integer of 1 or more and 10 or less.)

In the general formula (1), when m + n is 11 or less, the contribution of the hydrophobic alkyl chain is insufficient, making it difficult to achieve the effect of reducing the dynamic surface tension by the surfactant a. In the general formula (1), when m + n is 15 or more, the contribution of the hydrophobic alkyl chain becomes excessive, making it difficult for the surfactant a to dissolve in water. In the general formula (1), when x is 11 or more, the contribution of the hydrophilic butylene oxide chain becomes excessive, making it difficult to achieve the effect of reducing the dynamic surface tension by the surfactant a.

In the ink according to this embodiment, the content of the surfactant a is favorably 0.1 mass% or more in order to sufficiently achieve the above effect of the surfactant a. Further, in the ink according to this embodiment, the content of the surfactant a is favorably 1.0 mass% or less from the viewpoint of preventing foaming and suppressing a decrease in ejection stability due to the entry of bubbles into the recording head.

### (Pigment c)

The ink according to this embodiment includes the pigment c as a coloring agent from the viewpoints of color mixing prevention and improvement in water resistance in the image recorded on the recording medium. The pigment c may be either an inorganic pigment or an organic pigment. Further, as the pigment c, these may be combined with an extender pigment as necessary.

Specific examples of the inorganic pigment that can be used in the ink according to this embodiment include carbon black and a metal oxide. In particular, in the case of a black ink, carbon black is favorable. Examples of the carbon black include furnace black, thermal lamp black, acetylene black, and channel black.

Specific examples of the organic pigment that can be used in the ink according to this embodiment include an azo pigment, a diazo pigment, a phthalocyanine pigment, a quinacridone pigment, an isoindolinone pigment, a dioxazine pigment, a perylene pigment, a perinone pigment, a thioindigo pigment, an anthraquinone pigment, and a quinophthalone pigment.

In the ink according to this embodiment, the hue is not particularly limited, and a colored pigment of any of colors such as yellow, magenta, cyan, blue, red, orange, and green can be used. Favorable specific examples of the colored pigment include C.I. Pigment Yellow, C.I. Pigment Red, C.I. Pigment Orange, C.I. Pigment Violet, C.I. Pigment Blue, and C.I. Pigment Green. In the ink according to this embodiment, one or more selected from these colored pigments can be used as the pigment c.

### (Water)

In the ink according to this embodiment, ion exchanged water, purified water, distilled water, or the like can be used as water. In the ink according to this embodiment, the content of water is favorably 40 mass% or more and 70 mass% or less from the viewpoints of dryness and ejection reliability.

### (Other components)

In the ink according to this embodiment, components other than the above may be blended as necessary. For example, in the ink according to this embodiment, a dispersant having the effect of enhancing the dispersibility of the pigment c in the solvent can be blended. As the dispersant, a pigment dispersion resin, a surfactant, or the like can be used.

The pigment dispersion resin is resin fine particles and is adsorbed on the surface of the pigment c to enhance the dispersibility of the pigment c in the solvent. The molecular weight of the pigment dispersion resin is favorably approximately several ten thousand. Examples of the pigment dispersion resin include an acrylic resin, a styrene-acrylic resin, a styrene-maleic acid resin, and a urethane resin. Of these, the styrene-acrylic resin is favorable. The pigment dispersion resin favorably has an acid value of 150 mg KOH/g or more from the viewpoints of improving the dispersibility of the pigment c in the solvent, micronization, enhancing the color development/coloration power of the pigment c, and the like. Meanwhile, the pigment dispersion resin favorably has an acid value of 300 mg KOH/g or less from the viewpoint of improving the preservation stability of the ink.

The surfactant to be blended as a dispersant is blended separately from the surfactant a and enhances the dispersibility of the pigment c in the solvent by reducing the interfacial tension between the pigment c and the solvent. As such a surfactant, for example, a nonionic surfactant or an anionic surfactant can be used.

Further, in the ink according to this embodiment, various additives such as a dissolution stabilizer, an anti-drying agent, an antioxidant, a viscosity adjustor, a pH adjuster, a neutralizer, and an antifungal agent may be blended as necessary in addition to the dispersant.

### [Examples and Comparative Examples]

As Examples and Comparative Examples of the present disclosure, inks were prepared and evaluated.

### (Preparation of ink)

First, a pigment dispersion liquid including the pigment c dispersed in water was prepared. The pigment dispersion liquid was prepared by blending the pigment c, a pigment dispersion resin, sodium hydroxide, OLFINE (registered trademark) E1010, and water such that the content shown in Table 1 was achieved.

**(Table 1)**

| Component | Content (mass%) |
|---|---|
| Pigment c | 15 |
| Pigment dispersion resin | 6.0 |
| Sodium hydroxide | 0~1.0 |
| OLFINE E1010 | 0.5 |
| Water | Remainder |

As the pigment dispersion resin, a styrene-acrylic resin that has a molecular weight of 20,000 and an acid value of 100 mg KOH/g was used. Sodium hydroxide was blended as a neutralizer for neutralizing the pigment dispersion resin. OLFINE (registered trademark) E1010 is the surfactant to be blended as a dispersant and is a nonionic surfactant manufactured by Nissin Chemical Co., Ltd. As water, ion exchanged water was used.

The pigment dispersion liquid was prepared by mixing the above components by wet dispersion using a media-type wet disperser. Examples of the media-type wet disperser include a wet disperser (more specifically, "Nano Grain Mill" manufactured by ASADA IRON WORKS.CO., LTD., "MSC mill" manufactured by NIPPON COKE & ENGINEERING. CO., LTD., "DYNO (registered trademark)-MILL" manufactured by Shinmaru Enterprises Corporation, and the like).

In the wet dispersion using a media-type wet disperser, media (zirconia beads having a diameter of 0.5 mm) were set in a vessel and the ejection rate was controlled at 200 to 600 g/min to adjust the average particle diameter of the pigment dispersion including the dispersant adhered to the pigment c dispersed in water to 70 to 130 nm. The grain size distribution of the pigment dispersion was measured using "Zetasizer Nano" manufactured by Sysmex Corporation with a diluted solution obtained by diluting the pigment dispersion liquid 300 times with ion exchanged water.

Next, inks according to Examples and Comparative Examples were prepared. The inks according to Examples and Comparative Examples were prepared by blending the above pigment dispersion liquid, surfactant a, water-soluble solvent b, and water such that the content shown in Table 2 was achieved. Further, the surfactant a and the water-soluble solvent b used in Examples and Comparative Examples are shown in Table 3. Note that m, n, and x in Table 3 respectively indicate m, n, and x in the above general formula (1). Further, Table 3 also shows the log Kow of the water-soluble solvent b, which was obtained from the calculation software "HSPiP". As water, ion exchanged water was used.

**(Table 2)**

| Component | Content (mass%) |
|---|---|
| Pigment dispersion liquid | 8 |
| Surfactant a | 0.5 |
| Water-soluble solvent b | 40 |
| Water | Remainder |

**(Table 3)**

| | | Surfactant a | | | | Water-soluble solvent b | |
|---|---|---|---|---|---|---|---|
| | | m | n | m+n | x | Name | log Kow |
| Example | 1 | 6 | 6 | 12 | 5 | Propylene glycol | -0.92 |
| | 2 | 6 | 6 | 12 | 5 | Triethylene glycol monobutyl ether | 0.44 |
| | 3 | 6 | 6 | 12 | 5 | Ethylene glycol monobutyl ether | 0.83 |
| | 4 | 1 | 12 | 13 | 5 | Triethylene glycol monobutyl ether | 0.44 |
| | 5 | 11 | 3 | 14 | 5 | Triethylene glycol monobutyl ether | 0.44 |
| | 6 | 6 | 6 | 12 | 1 | Triethylene glycol monobutyl ether | 0.44 |
| | 7 | 6 | 6 | 12 | 10 | Triethylene glycol monobutyl ether | 0.44 |
| Comparative Example | 1 | 6 | 6 | 12 | 5 | 1,3-propanediol | -1.04 |
| | 2 | 6 | 6 | 12 | 5 | 1-butanol | 0.88 |
| | 3 | 8 | 7 | 15 | 5 | Triethylene glycol monobutyl ether | 0.44 |
| | 4 | 5 | 6 | 11 | 5 | Triethylene glycol monobutyl ether | 0.44 |
| | 5 | 6 | 6 | 12 | 11 | Triethylene glycol monobutyl ether | 0.44 |

In the preparation of each ink, the solvent was stirred using a stirrer while the components shown in Table 2 were added thereto in the order. Further, the ink obtained after stirring was filtrated using a filter with a pore size of φ5 µm to remove foreign substances, debris, and coarse particles.

### (Measurement and evaluation of inks)

For the inks according to Examples and Comparative Examples, the dynamic surface tension was measured and the curling and wet-spreading property were evaluated.

### ·Method of measuring dynamic surface tension

The dynamic surface tension of each ink was measured using a bubble pressure method. In the measurement of the dynamic surface tension, "bubble pressure dynamic surface tensiometer BP100" manufactured by KRÜSS GmbH and a capillary having a diameter of 0.4 mm were used. The bubble pressure method is a method of calculating the surface tension by inserting a capillary of known diameter into a liquid, introducing a gas into the capillary, and measuring the pressure of the bubble formed at the tip of the capillary. By changing the rate at which the interface is formed by changing the amount of gas to be introduced into the capillary, the change in surface tension for each rate at which the interface is formed can be measured. The time from the start of forming the interface until the pressure reaches its maximum is called the surface age. For each ink, the dynamic surface tension at the surface age of 10 msec was measured.

### ·Method of evaluating curling

In the evaluation of curling, an inkjet recording apparatus (line-type, manufactured by KYOCERA Document Solutions Inc.) was used as a tester and A4-size plain paper ("C2" manufactured by FUJIFILM Business Innovation Corp.) was used as a recording medium. The ink tank for black in the tester was filled with each ink. Then, a 10 cm × 10 cm solid image was formed at the center of the recording medium on one side using the tester under conditions of a temperature of 32°C and a relative humidity of 50% RH. The recording medium immediately after forming the solid image was allowed to stand on a horizontal table with the surface on which the solid image was formed downward.

The distance from the table to each of the four corners of the recording medium (the height of each of the four corners raised due to the curling of the recording medium) at the time point 10 seconds after the solid image was formed was measured. The average value of the measured distances from the table to the four corners of the recording medium was used as an evaluation value for curling. By using the evaluation value for curling of each ink, the curling was evaluated in accordance with the following A, B, and C criteria. Inks with the evaluation for curling of A or B are evaluated to "Pass" and inks with the evaluation of C are evaluated to "Fail".
A (Good): 15 mm or less
B (Acceptable): exceeding 15 mm and 20 mm or less
C (Poor): exceeding 20 mm

### ·Wet-spreading property

In the evaluation of wet-spreading property, an inkjet recording apparatus (line-type, manufactured by KYOCERA Document Solutions Inc.) was used as a tester and copy paper ("CC90" manufactured by Mondi plc) was used as a recording medium. The ink tank for black in the tester was filled with each ink. Then, a straight line (one-dot line) was formed on the recording medium at the ejection rate of 8 m/s using the tester under conditions of a temperature of 32°C and a humidity of 15%.

The line width of the straight line formed on the recording medium was measured using a microscope. The measured line width was used as an evaluation value for the wet-spreading property of each ink. By using the evaluation value for the wet-spreading property of each ink, the wet-spreading property was evaluated in accordance with the following A and B criteria.
Inks with the evaluation for the wet-spreading property of A are evaluated to "Pass" and inks with the evaluation of B are evaluated to "Fail".
A (Good): 75 µm or more
B (Poor): less than 75 µm

### ·Evaluation results

The measurement results of the dynamic surface tension and the evaluation results of curling and wet-spreading property of the inks according to Examples and Comparative Examples are shown in Table 4.

**(Table 4)**

| | | **Dynamic surface tension** | **Curling** | | **Wet-spreading property** | |
|---|---|---|---|---|---|---|
| | | **Measurement value** (mN/m) | **Evaluation value** (mm) | **Determination** | **Evaluation value** (*µ*m) | **Determination** |
| Example | 1 | 32 | 20 | B | 80 | A |
| | 2 | 35 | 10 | A | 78 | A |
| | 3 | 40 | 5 | A | 75 | A |
| | 4 | 34 | 7 | A | 77 | A |
| | 5 | 35 | 9 | A | 79 | A |
| | 6 | 31 | 12 | A | 80 | A |
| | 7 | 37 | 13 | A | 76 | A |
| Comparative Example | 1 | 30 | 25 | C | 81 | A |
| | 2 | 41 | 16 | B | 70 | B |
| | 3 | - | - | - | - | - |
| | 4 | 43 | 18 | B | 68 | B |
| | 5 | 42 | 19 | B | 71 | B |

In any of the inks according to Examples 1 to 7, both the curling and the wet-spreading property were evaluated to "Pass". Further, in the inks according to Examples 2 to 7, particularly high evaluation results for curling were obtained. This is presumably because in the inks according to Examples 2 to 7 in which the water-soluble solvent b has high hydrophobicity, the effect of suppressing the occurrence of curling in the recording medium was particularly effectively achieved.

On the other hand, in the ink according to Comparative Example 1, the curling was evaluated to "Fail". This is presumably because in the ink according to Comparative Example 1 in which the water-soluble solvent b has high hydrophilicity, the effect of suppressing the occurrence of curling in the recording medium was not sufficiently achieved.

In the ink according to Comparative Example 2, the wet-spreading property was evaluated to "Fail". This is presumably because in the ink according to Comparative Example 2 in which the water-soluble solvent b has high hydrophobicity, the effect of reducing the dynamic surface tension by the surfactant a was not sufficiently achieved.

In the ink according to Comparative Example 3, the surfactant a was not dissolved in the solvent and evaluation could not be performed. This is presumably because in Comparative Example 3, the hydrophobic alkyl chain in the surfactant a was too long, resulting in insufficient solubility in water.

In the ink according to Comparative Example 4, the wet-spreading property was evaluated to "Fail". This is presumably because in the ink according to Comparative Example 4 in which the alkyl chain in the surfactant a is short, the effect of reducing the dynamic surface tension was not sufficiently achieved due to the insufficient contribution of the hydrophobic alkyl chain.

In the ink according to Comparative Example 5, the wet-spreading property was evaluated to "Fail". This is presumably because in the ink according to Comparative Example 5 in which the butylene oxide chain in the surfactant a is long, the effect of reducing the dynamic surface tension was not sufficiently achieved due to the excessive contribution of the hydrophilic butylene oxide.

## Claims

1. An ink, comprising:
a surfactant represented by the following general formula (1);
a water-soluble solvent having a log Kow of -1.0 or more and 0.85 or less;
a pigment; and
water,
a content of the water-soluble solvent being 20 mass% or more and 50 mass% or less: 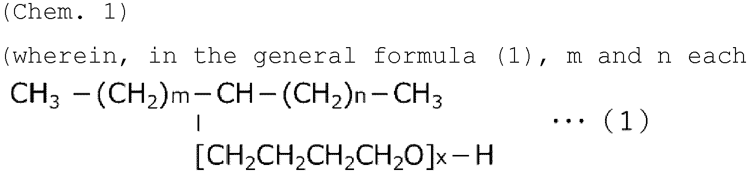 represent an integer satisfying a relationship of 12 ≤ m + n ≤ 14, and x represent an integer of 1 or more and 10 or less).

2. The ink according to claim 1, wherein
the water-soluble solvent has a log Kow of 0.4 or more and 0.85 or less.
